# EUROPEAN PATENT SPECIFICATION

(11) **EP 3 877 759 B1**
(45) Date of publication and mention of the grant of the patent: **15.01.2025**
(21) Application number: 19881116.8
(22) Date of filing: 07.11.2019
(51) Int. Cl.: G01N 30/36, B01D 15/08

(54) **A CHROMATOGRAPHY COMPONENT**
CHROMATOGRAFIEKOMPONENTE
COMPOSANT DE CHROMATOGRAPHIE

(30) Priority: 09.11.2018 AU 2018904271; 09.11.2018 AU 2018904272; 09.11.2018 AU 2018904273; 09.11.2018 AU 2018904274; 09.11.2018 AU 2018904275; 09.11.2018 AU 2018904276
(43) Date of publication of application: 15.09.2021
(73) Proprietor: Western Sydney University, Penrith, New South Wales 2751 (AU)
(72) Inventor: SHALLIKER, Ross Andrew, Penrith, New South Wales 2751 (AU)
(74) Representative: Maiwald GmbH
(86) International application number: PCT/AU2019/051221
(87) International publication number: WO 2020/093095

(56) References cited:
- AU-A- 3 335 501
- GB-A- 1 399 397
- GB-A- 2 238 257
- US-A- 4 451 365
- US-A- 5 227 059
- US-A1- 2012 056 632
- US-A1- 2013 306 558
- US-B2- 8 936 723

## Description

### Cross-Reference to Related Applications

The present application claims priority from Australian Provisional Patent Application No 2018904271 filed on 9 November 2018, Australian Provisional Patent Application No 2018904272 filed on 9 November 2018, Australian Provisional Patent Application No 2018904273 filed on 9 November 2018, Australian Provisional Patent Application No 2018904274 filed on 9 November 2018, Australian Provisional Patent Application No 2018904275 filed on 9 November 2018, Australian Provisional Patent Application No 2018904276 filed on 9 November 2018.

### Technical Field

This disclosure relates, generally, to the field of chromatography and, more particularly to a chromatography component for a chromatography column fitting and to a chromatography system including such fitting and component.

### Background

Modern chromatography columns are widely employed to undertake separation of mixtures and are utilized in a vast number of chemical, biological, environmental and medical science applications. Chromatographic separation of a sample that comprises a variety of analytes or solutes is achieved by dissolving the sample in a suitable solvent (consistent with the chromatographic conditions and the solubility of the sample components), after which this sample is loaded into the chromatography column and eluted through the packing bed using what is termed a mobile phase (a solvent having properties that allows for the chromatographic separation mechanism to be obtained). The mobile phase is usually a liquid, but it could also be a supercritical fluid. The packing bed is termed the stationary phase, which is generally made from chemically derivatised beads or even a monolithic material (often the beads or monolith are silica based, but they can be polymeric, zirconia, or other suitable materials).

The stationary phase is contained in what is usually a tubular column having an entry point and an opposed exit point. The mobile phase carries the sample through the column that contains the stationary phase. Separation of the analytes occurs through a variety of mechanisms, which reflect the interactions that are apparent between the analytes, the mobile phase and the stationary phase. The objective is to separate the analytes into their respective analyte types, and in doing so, each analyte type is contained within a distribution, ideally a normal distribution having a very narrow standard deviation.

As the mobile phase passes through the column, the analyte eventually leaves the column and its presence in the flow stream is detected as a function of time by a detector arranged downstream of the column. The variation in detection signal with time is referred to as a chromatogram. Peaks on this chromatogram show the presence of different components within the mixture. The degree of separation of the different components depends upon the separation efficiency or resolution of the column. The resolution of the column depends upon many factors, such as the packing bed uniformity, the flow through end fittings of the column, frits associated with the end fittings, etc. Other factors include the nature of the mobile and stationary phases.

Ideally, the packing material within the chromatography column should be homogeneously distributed, such that the packing density is constant across all sections of the bed. However, it is well known within the industry that this is not always the case. The packing of the chromatography column is heterogeneous, both in the axial direction and in the radial direction. Subsequently as an analyte migrates along the column it does so with a band profile that has a parabolic type profile that contains more solute in an axially centrally arranged zone than in a radially distributed zone near the walls of the column. An ideal profile of the analyte should, instead, be a flat thin band where the solute is uniformly distributed. Furthermore, an exit port or opening of the chromatography column contains just a single outlet hole and, as a result, mobile phase and analyte contained outside of the central zone of the column must migrate radially inwardly across the column to this outlet hole. A frit is located in the end fitting to assist in this radial migration but, nevertheless, analyte and mobile phase near the wall of the column require substantially more time to migrate to the outlet hole than analyte and mobile phase that traversed the column axially along the central region of the column. As a result, the chromatographic peak that is observed by the detector is broadened and usually contains a significant tailing factor. This broadening and tailing process reduces the efficiency of the separation and, hence, decreases the resolving power of the column.

Other factors contribute to decreasing the resolving power of the column, including connection of the outlet of the column to the downstream detection source during which the analyte bands continue to undergo band broadening, further contributing to the loss of resolving power of the separation process.

Another important factor in the application of chromatographic separation is the achievement of the separation process at high through-put so that many samples can be analysed meeting the demands of the modern process scale laboratory. High through-put demands high flow rates.

An undesirable aspect associated with the use of high flow rates is frictional heating effects that cause a mobile phase flow to heat up. This heating effect increases the temperature of a column outlet compared to a column inlet. In addition, a radially central region of a column bed becomes hotter than a wall region of the bed. This results in a decreased separation performance, especially as the pressure limitation of the column is reached, which is an important limitation in high through-put assays.

One of the most important detectors for chromatographic separations is the mass spectral (MS) detector. However, in order for the MS detector to function efficiently all solvent must be removed from the gas stream that feeds sample to the detector. As a result, the MS detector has a flow rate limited response, and often post column flow stream splitting is required so as to send only a portion of the mobile phase to the MS. Adding a post column flow stream splitter reduces the efficiency of the separation since extra column dead volume is added.

Undesirable factors in chromatographic separation are therefore the detrimental effects of heat generated at high flow rates and extra column dead volumes and their contributions to band broadening. That is especially important as the particle size decreases and volume of the column decreases.

Selectivity in a separation may also be achieved by selective methods of detection. For example, post column derivatisation (PCD) might be employed. In PCD, the sample analytes are reacted with another chemical to produce a different compound that responds to the detection source in a selective manner. Only certain compounds are chemically derivatised, and it is only the derivatised analytes that are seen by the detector. Typically in PCD reactions, the analyte flow stream is split into two or more parts, one portion sent to the derivatisation process and the other sent to a second detector. An unfortunate outcome of PCD processes is that the extra column dead volume is increased, and that increases band broadening, decreasing resolution.

It is also important to understand that separation between differing types of analytes is controlled in part by selectivity. Selectivity is governed by different intermolecular forces and is affected by the type of solute and the type of stationary phase. To enhance separation power, two or more different types of stationary phases may be utilized, in a process that is referred to as multidimensional chromatography or, in another technique, mixed mode chromatography. In both those types of processes, multiple columns may be employed for a single separation. Such columns, however, need to be connected which, in a conventional column coupling process, results in dead volume being added to the system between each column. This leads to a reduction in the efficiency of the separation process. Furthermore, since each column contains two end fittings, which in their own right lead to a reduction in performance for the passage of analyte through each fitting, ultimately coupling columns results in degraded performance.

Separation performance and, hence, peak capacity, can also be increased using gradient elution methods. In gradient elution chromatography, the solubility of the analyte in the mobile phase is initially poor, then the solubility is increased over a period of time by changing the strength of the mobile phase. While gradient elution is more conveniently undertaken using solvent programming, it could also be achieved by changing the 'strength' of the stationary phase. In high-performance liquid chromatography (HPLC), stationary phases cannot be changed dynamically as is the case for solvent programming; rather, separate columns are connected together. Each column has a different stationary phase loading. That is, for example, the first column might be a C4 phase, the second a C8 phase, the third a C18 phase. Retention increases successively across the columns, while the solvent strength stays constant. This process is less convenient than solvent programming because it is easier to change the mobile phase than the stationary phase. However, one limiting factor associated with solvent gradient elution is that the column must be regenerated with the initial solvent prior to the next analysis. This usually requires a minimum of five column volumes of the initial mobile phase solvent to be passed through the column. As such, that period of time represents a non-productive period since no analysis is being undertaken. On the other hand, stationary phase gradient systems utilize a constant - or isocratic mobile phase. Hence there is no period throughout the analysis where the column would have to be regenerated with mobile phase. Consequently, there is no dead time between the analysis of different samples.

Over the course of the development of HPLC it has become well understood that, if a detector could be located directly at the end of the packing bed in the column, then two factors could be resolved simultaneously: firstly, the detector could function as a point source detector so that only analyte that passes through the point source would be detected. In that way analyte bands that have a profile that resembles a partially filled bowl would instead appear to the detector as thin flat disks. Furthermore, the radial migration of mobile phase and solute from the wall region to the outlet hole is no longer important since that would occur after the detector. Secondly, since the detector is located directly at the end of the actual packing bed, no connective tubing is required minimising any dead volume that could contribute to the further column band broadening process. More efficient separations could therefore be achieved.

Numerous researchers have shown the benefit of end column detection. Some research has used an array of micro-electrodes at the end of the column: Four gold electrodes were embedded into a frit at accurately known radial locations. One electrode was near the column centre, two others at approximately half the distance to the column wall and the fourth electrode was close to the wall. The research showed that the mobile phase velocity was systematically lower near the column wall than in the centre of the column and the most efficient region of the column was the central core with the efficiency decaying quickly with radial distance from the centre. The research concluded that localised end column detection would yield much higher performing separations than those recorded using bulk detectors.

In an attempt to improve the spatial resolution of the end column detection process, an optical sensor has been developed using fluorescence and a photo-diode detection array, operating with up to ten sensors simultaneously. The research using this array resulted in findings which supported prior works using electrochemical sensors.

Irrespective of the great potential offered by an end-column detection process, the commercial realisation of such a detection process has never been achieved, largely because those types of end column detectors are not well suited to mainstream applications: they are fragile and complex to operate and are difficult for users to implement on a day to day basis.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each of the appended claims.
US 4 451 365 A discloses a device for clamping and rapidly changing columns for use in liquid chromatography separation, wherein the device has connectors which are provided with inlets and outlets for the mobile phase passing through the column, and wherein the connection between column and connector has no dead volume due to the combined action of the sealing elements of the column and the connectors.

### Summary

In a first aspect of the disclosure there is provided a chromatography column fitting which includes
a body member configured to be received at an end of a chromatography column, the body member defining an axially extending open bore; and
an insert received in the bore, the insert defining a flow conduit opening out into an operatively inner end of the insert to be in flow communication, in use, with an interior of the chromatography column, the operatively inner end defining a bearing surface, the bearing surface bearing against contents at the end of the chromatography column to minimise dead volume between the flow conduit and the contents of the chromatography column.

In this specification, the term "column" or "chromatography column" is to be understood as a tubular member in which a stationary phase of the chromatography system is received.

Further, unless the context clearly indicates otherwise, the term "open bore" is to be understood as a passage extending through the body member from one end to the other, the bore opening out into each end of the body member.

The insert and the body member may carry complementary mounting formations which facilitate removable insertion of the insert into the bore of the body member.

The bore may have a diameter approximating a diameter of a passage of the column.

A retention element may, in use, be arranged at an end of the column to which the body member is mounted, the bearing surface bearing against the retention element to minimise dead volume between the flow conduit and the retention element. It will be appreciated that, in some applications, the retention element may be omitted from the chromatography column with the contents of the column being monolithic media packed in the passage of the column. In such applications, the bearing surface of the insert may bear directly against the contents of the column.

The bore may be configured to accommodate the operatively inner end of the insert substantially flush with a retaining formation defined in the bore of the body member. The retaining formation may be configured to retain the retention element in position at the end of the column. The bore may be stepped part way along its length and the retaining formation may be a radially inwardly directed shoulder defined by the step in the bore of the body member.

The bearing surface of the insert may be defined by a boss having an outer diameter approximating that of the diameter of the passage of the column.

The insert may define a receiving formation, into which the flow conduit opens, in which a component is removably receivable. The receiving formation may be one or more ports and the component may be a carrier or plug carrying capillary tubing for conveying analyte to downstream chromatography equipment such as, for example, a detector.

The bore of the body member may be configured, upon removal of the insert, to receive one of a range of other chromatography components in the bore.

In a second aspect of the disclosure, there is provided a chromatography column assembly which includes
a chromatography column defining a passage in which a stationary phase is receivable, the column having a pair of opposed ends with the passage opening out into each end;
an end fitting mounted to at least one of the ends of the chromatography column, the end fitting defining a bore having a diameter approximating a diameter of the passage of the column; and
an insert received in the bore of the end fitting, the insert having a bearing portion which bears against contents at the at least one end of the chromatography column, the insert defining a flow conduit opening out into the bearing portion, the bearing portion being configured to minimise dead volume between the contents of the column and the flow conduit.

The end fitting and the associated end of the column may have complementary mounting formations for releasably mounting the end fitting.

The contents may comprise a retention element arranged at each end of the passage of the column to retain the stationary phase within the passage. The end fitting may define a retaining formation for retaining the retention element in position at the end of the column.

An end fitting may be mounted at each end of the column.

The end fitting may be the chromatography column fitting of the first aspect of the disclosure described above.

In a third aspect of the disclosure, there is provided a chromatography component which includes
a body mountable to an end of a chromatography column, the body defining a first flow conduit opening out into an operatively inner end of the body to be in flow communication, in use, with an interior of the chromatography column;
a bearing surface defined by the operatively inner end which bears against contents at the end of the chromatography column to minimise dead volume between the flow conduit and the contents of the chromatography column; and
at least one further flow conduit defined by the body, at least a portion of an analyte passing through the column being received in the at least one further flow conduit.

The body may be mountable via an end fitting to the end of the chromatography column, the end fitting defining a bore within which the body is receivable. The body may be removably receivable in the bore of the end fitting, the body and the end fitting defining complementary mounting formations for mounting the body within the bore of the end fitting.

The operatively inner end of the body may have a peripheral dimension approximating a peripheral dimension of an interior passage of the chromatography column for bearing against the contents of the chromatography column. It will be appreciated that the contents of the chromatography column generally includes a stationary phase packed within a passage of the column. The "contents" of the column may thus be the stationary phase itself, if packed appropriately, or, instead, a retention element, such as a frit, arranged at the end of the column for retaining the stationary phase within the passage of the column. In an embodiment, the operatively inner end of the body of the component bears against such a frit to minimise dead volume between the first flow conduit and the frit.

In an embodiment, the first flow conduit may extend axially and centrally along the body with the at least one further flow conduit extending parallel to, but radially offset from, the first flow conduit. A flow directing path may be defined in the body for directing flow of a portion of the analyte to the at least one further flow conduit. The flow directing path may be in the form of a channel, typically an annular channel, defined in the operatively inner end of the body.

The first flow conduit may communicate with tubing to supply analyte from the chromatography column to downstream equipment of a chromatography system. The first flow conduit may open into a port defined in the body, the port being configured to receive a chromatography element which carries the tubing for connecting the chromatography column to the downstream equipment of the chromatography system. The downstream equipment may include a detector for analysing the analyte, the detector being connected to the column via capillary tubing. The chromatography element may be a plug carrying the capillary tubing for placing the tubing in flow communication with the first flow conduit of the body. In other embodiments, the capillary tubing may be carried directly by the body to communicate with the first flow conduit.

In an embodiment, the first flow conduit may extend axially and centrally along the body with the at least one further flow conduit branching off from the first flow conduit at a location spaced from the operatively inner end of the body.

The body may define a first portion extending substantially parallel to, and co-axially with, a longitudinal axis of the chromatography column and a second portion extending transversely from the first portion with the at least one further flow conduit being defined in the second portion.

In a further embodiment, the second portion may comprise two parts extending in radially opposite directions from the first portion with at least one further flow conduit being defined in each of the two parts.

In fourth aspect of the disclosure, there is provided a chromatography component which includes
a body mountable to an end of a chromatography column, the body defining at least one primary flow conduit opening out into an operatively inner end of the body to be in flow communication, in use, with an interior of the chromatography column;
a bearing surface defined by the operatively inner end of the body, the inner end being configured to bear against contents at the end of the chromatography column to minimise dead volume between the flow conduit and the contents of the chromatography column; and
at least one secondary flow conduit defined in the body and being configured for injection of a reagent for mixing with an analyte exiting the chromatography column.

The body may be mountable via an end fitting to the end of the chromatography column, the end fitting defining a bore within which the body is receivable. The body may be removably receivable in the bore of the end fitting, the body and the end fitting defining complementary mounting formations for mounting the body within the bore of the end fitting.

The operatively inner end of the body may have a peripheral dimension approximating a peripheral dimension of an interior passage of the chromatography column to bear against the contents of the chromatography column. It will be appreciated that the contents of the chromatography column generally includes a stationary phase packed within a passage of the column. The "contents" of the column may thus be the stationary phase itself, if packed appropriately, or, instead, a retention element, such as a frit, arranged at the end of the column for retaining the stationary phase within the passage of the column. In an embodiment, the operatively inner end of the body of the component bears against such a frit to minimise dead volume between the first flow conduit and the frit.

The body may define a plurality of secondary flow conduits, through each of which the reagent is injectable. Each secondary flow conduit may communicate indirectly with the primary flow conduit. More particularly, each secondary flow conduit may communicate with the primary flow conduit via a retention element arranged at the end of the chromatography column. In use, the secondary flow conduits, carrying the reagent, may communicate with the primary flow conduit, carrying the analyte, through the retention element to form a mixed sample. The mixed sample may be conveyed for detection by a detector of a chromatography system arranged downstream of the column or by a detection source contained within the body itself (as described below).

In a fifth aspect of the disclosure, there is provided a chromatography component which includes
a body mountable to an end of a chromatography column, the body defining at least one flow conduit opening out into an operatively inner end of the body to be in flow communication, in use, with an interior of the chromatography column;
a bearing surface defined by the operatively inner end of the body, the inner end being configured to bear against contents at the end of the chromatography column to minimise dead volume between the flow conduit and the contents of the chromatography column; and
a sensing arrangement contained within the at least one flow conduit.

The body may be mountable via an end fitting to the end of the chromatography column, the end fitting defining a bore within which the body is receivable. The body may be removably receivable in the bore of the end fitting, the body and the end fitting defining complementary mounting formations for mounting the body within the bore of the end fitting.

The operatively inner end of the body may have a peripheral dimension approximating a peripheral dimension of an interior passage of the chromatography column for bearing against the contents of the chromatography column. It will be appreciated that the contents of the chromatography column generally includes a stationary phase packed within a passage of the column. The "contents" of the column may thus be the stationary phase itself, if packed appropriately, or, instead, a retention element, such as a frit, arranged at the end of the column for retaining the stationary phase within the passage of the column. In an embodiment, the operatively inner end of the body of the component bears against such a frit to minimise dead volume between the first flow conduit and the frit.

The sensing arrangement may comprise a pair of sensing elements arranged within the at least one flow conduit, the sensing elements of the pair being axially spaced from each other within the at least one flow conduit. In an embodiment, the sensing elements may be a pair of electrodes arranged in axially spaced relationship within the at least one flow conduit.

The body may define at least one further flow conduit through which analyte can flow. In an embodiment, the at least one further flow conduit may channel a radial component of the analyte to a downstream location. However, in a further embodiment, the at least one further flow conduit may be used in a reference sensing configuration in an electrochemical detector. Thus, the sensing arrangement may include a sensing element arranged in the at least one further flow conduit.

The sensing arrangement may include connections for connecting the sensing elements to downstream signal processing circuitry.

In a sixth aspect of the disclosure, there is provided a chromatography component assembly which includes
a chromatography component as described above with reference to the fifth aspect of the disclosure; and
signal processing circuitry connected to the sensing arrangement of the component.

In a seventh aspect of the disclosure, there is provided a chromatography component which includes
a body mountable to an end of a chromatography column, the body defining at least one flow conduit opening out into an operatively inner end of the body to be in flow communication, in use, with an interior of the chromatography column;
a bearing surface defined by the operatively inner end of the body, the inner end being configured to bear against contents at the end of the chromatography column to minimise dead volume between the flow conduit and the contents of the chromatography column;
a first, inlet port defined in the body in communication with the at least one flow conduit for placing analyte received from the chromatography column into the at least one flow conduit in communication with a source of electromagnetic radiation; and
a second, outlet port defined in the body in communication with the at least one flow conduit for placing the analyte in the at least one flow conduit in communication with an electromagnetic radiation detector.

The body may be mountable via an end fitting to the end of the chromatography column, the end fitting defining a bore within which the body is receivable. The body may be removably receivable in the bore of the end fitting, the body and the end fitting defining complementary mounting formations for mounting the body within the bore of the end fitting.

The operatively inner end of the body may have a peripheral dimension approximating a peripheral dimension of an interior passage of the chromatography column for bearing against the contents of the chromatography column. It will be appreciated that the contents of the chromatography column generally includes a stationary phase packed within a passage of the column. The "contents" of the column may thus be the stationary phase itself, if packed appropriately, or, instead, a retention element, such as a frit, arranged at the end of the column for retaining the stationary phase within the passage of the column. In an embodiment, the operatively inner end of the body of the component bears against such a frit to minimise dead volume between the first flow conduit and the frit.

In an embodiment, the chromatography component may be operable as an ultraviolet (UV) radiation detector, the inlet port and the outlet port being aligned in the body member to provide a straight-through path for UV radiation. The at least one flow conduit may define a tortuous path having a part in axial alignment with the inlet and outlet ports, the UV radiation being transmitted through the part of the at least one flow conduit.

In an embodiment, the chromatography component may be operable as a fluorescence detector, the inlet port and the outlet port being arranged at an angle relative to each other and to the at least one flow conduit so that electromagnetic radiation emitted by a fluorescing analyte is emitted at an angle to excitation electromagnetic radiation. An included angle between the inlet port and the outlet port may be in the region of 90° or less.

The inlet port and the outlet port may indirectly communicate with the at least one flow conduit via the end of the chromatography column.

In an eighth aspect of the disclosure, there is provided a chromatography component which includes
a body mountable to an end of a chromatography column, the body defining a passageway extending through it to be in flow communication, in use, with contents at an end of the chromatography column;
a medium contained within the passageway through which an analyte, exiting the chromatography column can pass; and
mounting formations carried on opposite ends of the body, each mounting formation facilitating mounting of the body in a bore of an end fitting arranged on the end of the chromatography column to provide end-to-end coupling of chromatography columns.

The body may be removably receivable in the bore of the end fitting, the body and the end fitting defining complementary mounting formations for mounting the body within the bore of the end fitting.

The passageway of the body may have a peripheral dimension approximating a peripheral dimension of an interior passage of the chromatography column. It will be appreciated that the contents of the chromatography column generally includes a stationary phase packed within a passage of the column. The "contents" of the column may thus be the stationary phase itself, if packed appropriately, or, instead, a retention element, such as a frit, arranged at the end of the column for retaining the stationary phase within the passage of the column. In an embodiment, the operatively inner end of the body of the component bears against such a frit to minimise dead volume between the passageway and the frit.

The medium contained within the passageway of the body may be a monolithic medium. The monolithic medium may be the same phase as a stationary phase contained within the chromatography column.

The body may define a radially outwardly extending collar substantially centrally arranged, in an axial direction of the body, on opposite sides of which the mounting formations are arranged. The collar may thus define an abutment surface for an end of the end fitting in which the body is received, in use.

### Brief Description of Drawings

Embodiments of the disclosure are now described by way of example with reference to the accompanying drawings in which: -
Fig. 1 shows a schematic representation of a chromatography system;
Fig. 2 shows a schematic, sectional side view of an embodiment of a chromatography column fitting mounted to a chromatography column;
Fig. 3 shows a schematic, sectional side view of the chromatography column fitting of Fig. 2 with an insert of the fitting removed;
Fig. 4 shows a schematic, sectional side view of the chromatography column fitting of Fig. 2 in one application of the fitting;
Fig. 5 shows a schematic, sectional side view of a first embodiment of a chromatography component receivable in the chromatography column fitting of Fig. 2 after removal of the insert of the fitting;
Fig. 6 shows a schematic, sectional side view of a second embodiment of a chromatography component receivable in the chromatography column fitting of Fig. 2 after removal of the insert of the fitting;
Fig. 7 shows a schematic, sectional side view of a third embodiment of a chromatography component receivable in the chromatography column fitting of Fig. 2 after removal of the insert of the fitting;
Fig. 8 shows a schematic, sectional side view of a fourth embodiment of a chromatography component receivable in the chromatography column fitting of Fig. 2 after removal of the insert of the fitting;
Fig. 9 shows a perspective, front view of another embodiment of the chromatography component of Fig. 7;
Fig. 10 shows a perspective, rear view of the embodiment of the chromatography component of Fig. 9;
Fig. 11 shows a sectional side view of the chromatography component of Figs. 9 and 10;
Fig. 12 shows, on an enlarged scale, a part of the chromatography component of Figs. 9-11 encircled by circle 'A' in Fig. 11 of the drawings;
Fig. 13 shows a perspective, rear view of another embodiment of the chromatography component of Figs. 5 and 6, in use;
Fig. 14 shows a perspective, front view of the chromatography component of Fig. 13, in use;
Fig. 15 shows a sectional, plan view, taken along an X axis (horizontal axis), of the chromatography component of Figs. 13 and 14, in use;
Fig. 16 shows a sectional, side view, taken along a Y axis (vertical axis), of the chromatography component of Fig. 13 and 14, in use;
Fig. 17 shows a schematic, sectional side view of an embodiment of a chromatography component received in the body member of the fitting of Fig. 2 after removal of the insert from the body member;
Fig. 18 shows a schematic, sectional side view of an embodiment of a chromatography component received in the body member of the fitting of Fig. 2 after removal of the insert from the body member;
Fig. 19 shows a schematic, sectional side view of an alternative embodiment, to the embodiment of Fig. 18, of a chromatography component received in the body member of the fitting of Fig. 2 after removal of the insert from the body member;
Fig. 20 shows a schematic, sectional side view of an embodiment of a chromatography component received in the body member of the fitting of Fig. 2 after removal of the insert from the body member;
Fig. 21 shows a schematic, sectional side view of a further embodiment of a chromatography component received in the body member of the fitting of Fig. 2 after removal of the insert from the body member, the body member being omitted from Fig. 21 for ease of explanation;
Fig. 22 shows a perspective view of another embodiment of the chromatography component of Fig. 20, in use;
Fig. 23 shows a sectional side view of the chromatography component of Fig. 22;
Fig. 24 shows a schematic, sectional side view of an embodiment of a chromatography component for use with the chromatography column fitting of Fig. 2, after removal of the insert of the fitting; and
Fig. 25 shows a schematic representation of another embodiment of a chromatography system incorporating the chromatography component of Fig. 24.

### Detailed Description of Exemplary Embodiments

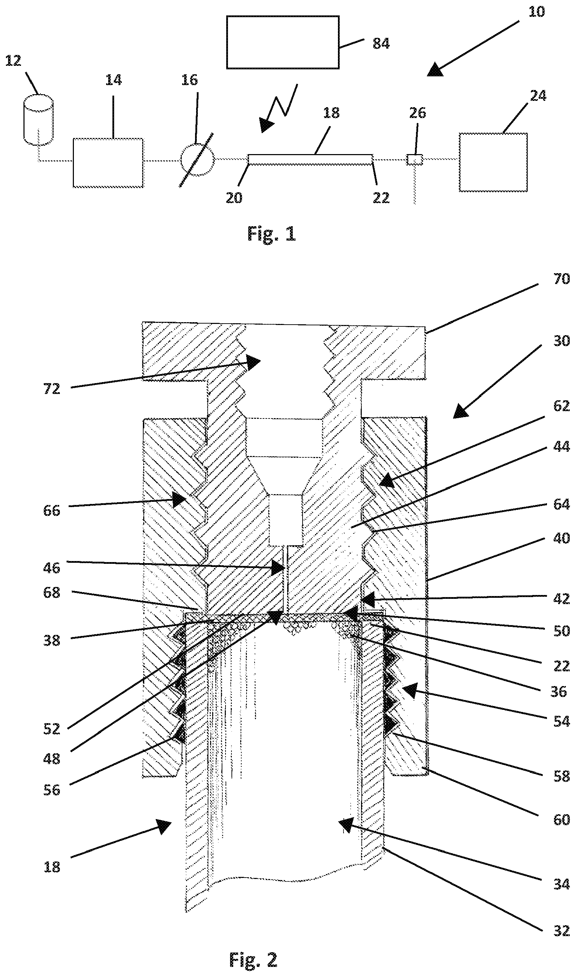

In Fig. 1 of the drawings, reference numeral 10 generally designates a chromatography system. The chromatography system 10 is, in particular, a high-performance liquid chromatography (HPLC) system. The system 10 comprises one or more reservoirs 12 of solvent used for conveying a sample to be analysed through a chromatography column 18. A solvent delivery module 14 is arranged downstream of the one or more reservoirs 12. The module 14 comprises one or more pumps to deliver a desired mobile phase solvent, or mixtures thereof, from the reservoir/s 12 through a sample-injection port or valve 16, which mixes the solvent with the sample, to an inlet end 20 of the column 18.

The chromatography column 18 has the inlet end 20 communicating with the valve 16 via which the sample is introduced into an interior of the column 18. The column 18 has an opposed, outlet end 22 which communicates with a detection source 24 via capillary tubing. The detection source 24 detects the constituent parts of the analyte to provide a chromatogram (not shown). In the illustrated embodiment, an optional splitter 26, which may be a T-piece splitter or radial splitter, is interposed between the outlet end 22 of the column 18 and the detection source 24. The splitter 26 is used for splitting off a portion of the analyte discharged from the chromatography column for other purposes, for example, post column derivatisation (PCD) analysis, or the like, or to send a portion of the analyte to waste.

Referring now to Figs. 2-4 of the drawings, an embodiment of a chromatography column fitting is illustrated and is designated generally by the reference numeral 30. The fitting 30 is configured to be mounted either on the inlet end 20 or the outlet end 22 of the column 18. In this regard, it is to be noted that the column 18 comprises a tubular member 32 defining an open passage 34. Typically, the tubular member 32 of the column 18 is circular cylindrical but it will be appreciated that the tubular member 32 could have cross sections (at right angles to a longitudinal axis of the tubular member 32) of other shapes, such as elliptical, polygonal, or the like.

The passage 34 of the tubular member of the column 18 is packed with a stationary phase 36. The stationary phase 36 is made from a chemically derivatised material such as beads, a monolithic material, or the like. The beads or monolith may be silica based, polymeric, zirconia, or other similar materials. The stationary phase 36 is tightly packed within the passage 34 of the tubular member 32 of the column 18 and is retained in position by a retention element 38, a retention element 38 being arranged at each end 20, 22 of the tubular member 32. The retention element 38 is in the form of a frit which is porous to the analyte passing through the passage 34.

For ease of explanation, the fitting 30 will be described with reference to its attachment to the outlet end, or downstream end, 22 of the column 18. However, it will be appreciated that a fitting 30 of the same configuration is mountable to the inlet end, or upstream end, 20 of the column 18.

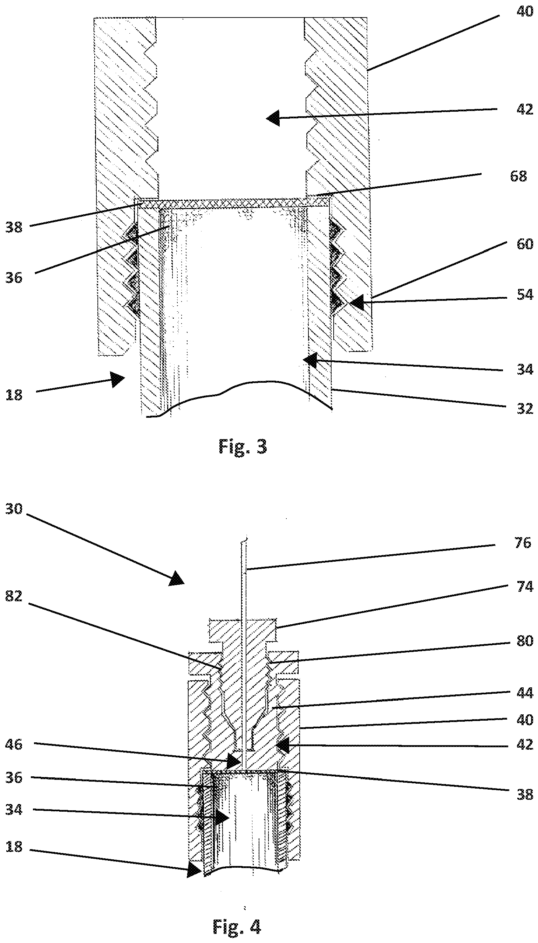

The fitting 30 includes a body member 40 configured to be received at the end 22 of the tubular member 32 of the chromatography column 18. The body member 40 defines an axially extending, centrally arranged open bore 42, illustrated most clearly in Fig. 3 of the drawings. An insert 44 is received in the bore 42 of the body member 40. The insert 44 defines a flow conduit 46, the flow conduit 46 being configured to minimise dead volume between an inlet end 48 of the flow conduit 46.

An operatively inner end 50 of the insert 44 defines a bearing surface 52 which bears against an operatively outer surface of the frit 38. The inlet end 48 of the flow conduit 46 opens out into the bearing surface 52 and, therefore, is in direct contact and flow communication with the operatively outer surface of the frit 38. This results in there being minimal dead volume between the flow conduit 46 and the frit 38 as well as the contents of the passage 34 of the column 18.

The bore 42 has an inner diameter approximating the diameter of the passage 34 of the chromatography column 18 so that the bearing surface 52 of the insert 44 bears on the frit 38 over a circular area approximating that of the circumference of the passage 34.

The body member 40 and the end 22 of the tubular member 32 of the chromatography column 18 carry complementary mounting formations 54 via which the body member is attached to the end 22 of the tubular member 32. In the embodiment illustrated, the complementary mounting formations 54 comprise an external screw thread 56 at the end 22 of the tubular member 32 and an internal screw thread 58 defined by a skirt portion 60 of the body member 40 of the fitting 30.

It will, however, be appreciated that the mounting formations 54 could adopt any of a number of other forms and a person of skill in the field will understand that such mounting formations could include welds, snap fittings, press fittings, bayonet fittings, or the like.

Similarly, the insert 44 is removably received within the bore 42 of the body member 40. The insert 44 and the body member 40 also carry complementary mounting formations 62 to facilitate removable insertion of the insert 44 into the bore 42 of the body member 40. In the illustrated embodiment, the complementary mounting formations 62 comprise an external screw thread 64 carried on the insert 44 which screw-threadedly engages with an internal screw thread 66 defined on a wall of the bore 42 of the body member 40. Once again, the mounting formations 62 could adopt any of a number of other forms including snap fittings, press fittings, bayonet fittings, or any other formations which facilitate removable insertion of the insert 44 into the bore 42 of the body member 40.

The body member 40 is internally stepped between the threads 56 and 64 to define a shoulder 68 which bears against the frit 38 to assist in retaining the frit 38 and the contents 36 of the passage 34 of the column 18 in position.

The insert 44 includes a manipulating formation, in the form of an enlarged head portion, 70 via which the insert 44 can be inserted into, and removed from, the bore 42 of the body member 40 with the use of appropriate tools.

The insert 44 defines a receiving formation in the form of a port 72 having an operatively inner end into which the flow conduit 46 opens out. In an embodiment, a chromatography element, in the form of a plug, 74 (Fig. 4) is removably received in the port 72. The plug 74 carries capillary tubing 76 of the same, or similar, internal diameter to the flow conduit 46 and, as described above, conveys analyte from the chromatography column 18 to the detection source 24. The plug 74 is removably received in the port 72 via complementary mounting formations 78.

In an embodiment, the mounting formations 78 comprise complementary screw threads 80, 82 carried by the wall of the insert 44 defining the port 72 and an external wall of the plug 74, respectively. However, once again, the mounting formations 78 could adopt other forms such as snap fittings, press fittings, bayonet fittings, or the like.

It will, however, be appreciated that, in other embodiments, the port 72 and plug 74 can be omitted and the capillary tubing 76 could be carried directly by the insert 44.

The chromatography column 18 is typically a liquid chromatography column but may be a supercritical fluid chromatography column, the column 18 having the open inlet end 20 and the open outlet end 22. A mobile phase, containing a solvent and sample to be separated, is introduced from the valve 16 into the interior passage 24 of the column 18 through the inlet end 20. The mobile phase is flowed along the passage 24 column 18 to the outlet end 22.

End fittings 30, of the type described, are attached to the inlet end 20 and the outlet end 22 of the body member 32 of the column 18 and serve to retain the stationary phase 36 within the passage 24 of the column 18 while allowing solvent to flow into the stationary phase 36.

The principles described are particularly useful for, in different embodiments, analytical chromatography, e.g. high performance liquid chromatography (HPLC), ultra-high performance liquid chromatography (UHPLC), multidimensional or two dimensional high performance liquid chromatography (MDHPLC or 2DHPLC), flash column chromatography, fast protein liquid chromatography (FPLC), parallel detection chromatography, supercritical fluid chromatography (SFC), and other chromatography applications.

With regard to the type of mobile phase and stationary phase to be used, any suitable type of mobile phase and stationary phase, e.g. any suitable and/or known phases, may be used which are appropriate for the type of chromatography being performed, e.g. any known HPLC mobile phase and stationary phase when performing HPLC. With regard to the type of separation method that may be used, any suitable conventional methods may be used, for example, either isocratic or gradient elution, or displacement elution, either normal phase or reverse phase, hydrophilic, ion exchange or ion exclusion, affinity, chiral, or size exclusion LC, etc.

Where the chromatography is supercritical fluid chromatography (SFC), the mobile phase may be a conventional supercritical fluid, such as carbon dioxide, but is not limited thereto. The fluid used in SFC could also be sub-critical, but operated at higher pressure and temperature than in HPLC, thereby reducing the viscosity, enabling faster separations.

The chromatography system 10 may be used for a wide variety of applications, including, for example, purity analysis, component analysis, quality analysis, quantitative analysis, and isolation or purification on an analytical scale, a pilot scale, an industrial scale, or the like. Market applications include, for example, drug discovery, clinical analysis, environmental analysis, and diagnostic marker research in the fields of proteins, glycoprotein, phosphoprotein, metabolites and nucleic acids, for example. The system 10 is thus suitable for use in, for example, the pharmaceutical, chemical, biotechnology, biopharmaceutical, and manufacturing industries.

In an embodiment, the column 18 is a packed column, i.e. a column containing any suitable bed for the stationary phase. Any conventional bed media may be packed inside the column as the column bed, depending on the type of chromatography being performed. The bed media may comprise, for example, particles or porous monolithic material (e.g. polymeric or ceramic monolithic beds). Instead, the bed media may comprise a membrane bed or any other bed. Particle sizes of the preferred particulate media may range, for example, between 1 µm and 12 µm, but in use, there is no lower or upper limit on particle size. A wide range of pore diameters may be used with porous media utilized depending on the type of chromatography; preferably pore sizes range between 30 Å and 3000 Å (3 and 300 nm). Porosities of a wide range may be used; preferably porosities lie in the range from 0 % to 80 %. Packing media may include various chemistries depending on the type of chromatography, for example, alkyl bonded phases, typical polar bonded phases, chiral stationary phases, or the like.

Integrated chip columns may use particles or porous monolithic beds. The column 18 may also be very useful when utilised with fragile particles since, depending on the application, end column detection processes will substantially reduce the inefficiency associated with packing fragile particles into a tube at low back pressure.

The type of detection source 24 that may be used in the system 10 may comprise any conventional detector for column chromatography, e.g. ultraviolet or visible (UV/Vis), mass spectrometric (MS), fluorescence (FL), chemiluminescence (CL), refractive index (RI), conductivity (CD), evaporative light scattering (ELSD), electrochemical detectors, or the like. Moreover, any non-conventional detector for column chromatography may be used, e.g. nuclear magnetic resonance (NMR) or infrared (IR) or antioxidant detectors, or any other bio-type detector.

The system 10 is controlled by a control and data collection module 84 comprising a computer and associated control electronics. The module 84 is configured for controlling the pump/s of the solvent delivery module 14 for pumping mobile phase to the valve 16. The module 84 further controls the valve 16 for mixing the mobile phase with the sample for injection into the column 18. The module 84 further receives and, optionally, processes data from the detection source 24. In addition, the module 84 also provides an output of the data, e.g. with or without processing thereof, as required, and may additionally control other components of the system 10.

The control and data collection module 84 is illustrated as communicating with the components of the system 10 wirelessly. However, it will be appreciated that the module 84 may communicate with the components such as the solvent delivery module 14, the valve 16 and the detection source 24 in a wired manner.

The materials used to manufacture the column 18 and the end fittings 30, including the insert 44 and plug 74, could be metal, most preferably stainless steel, but any noncorrosive metal could be employed, for example, titanium. The column 18, end fittings 30 and plug 74 could also be made from a suitable plastics material, for example, PEEK, acetal, or polytetrafluoroethylene, but any plastics material could be employed provided it was not susceptible to dissolution by the mobile phase employed. The end fittings 30 could also be made from glass. Glass fittings might be used in applications involving fast protein liquid chromatography which is conducted at low pressures. Still further, the column 18 and end fittings 30 could also be constructed from mixtures of metals, plastics and glass. There is no limitation to the materials used to manufacture the column 18 and end fittings 30 provided the chosen materials are able to withstand the properties of the solvents and the pressures utilised.

The column 18 can be fitted with any type of frit 38, i.e., any porosity, provided that the frit 38 can retain the particles of the stationary phase 36 within the passage 34 of the column 18. The frit 38 can be made of any material, provided the frit 38 is able to withstand the pressure within the passage 34 of the column 18 and is not soluble in the mobile phase. In applications where the detection source 24 uses an electrochemical detector, it is desirable that the frit 38 be constructed of a suitable plastics material.

In some applications, the stationary phase 36 may be made from monolithic materials, either silica or other ceramics, or polymers. Further, radial transport from a wall region of the passage to an axially central region of the passage 34 may be of less importance. In those applications, the frit 38 may be omitted with the bearing surfaces 52 of the inserts 44 of the end fittings 30 bearing directly against the stationary phase 36.

In use, one or more solvents are delivered, under control of the module 84, to the pump/s of the solvent delivery module 14 via tubing, the pump/s pumping at high or low pressures, depending on the application and requirements. The mobile phase, whether a homogenous or a heterogeneous mixture, discharged from the solvent delivery module 14 is fed to the sample-injection port or valve 16 where the sample to be analysed is introduced into the solvent flow.

The inlet end 20 of the chromatography column 18 carries a fitting 30 as described above having a similar plug to that at the outlet end 22. The plug at the inlet end 20 also carries capillary tubing via which the mobile phase, containing the sample, is introduced into the passage 34 of the chromatography column 18 through the flow conduit of the insert of the end fitting 30. As indicated above, the passage 34 of the column 18 is packed with the stationary phase or bed or provided with a monolithic stationary phase 36. The stationary phase 36 is retained in position within the column 18 by the end frits 38.

In the column, chromatographic separation occurs, both temporally and spatially, as the sample is carried by the mobile phase through the stationary phase 36. The separated constituent parts of the sample are delivered through the end fitting 30 via the plug 74 and capillary tubing 76 and to the detection source for generation, under control of the module 84, of a chromatogram representative of the analysis of the sample.

Optionally, a component of the separated constituent parts is split using the splitter 26 for other analysis purposes or to be sent to waste. Thus, in some applications, analyte discharged from the outlet end 22 of the chromatography column 18 may be fed to another HPLC column or to other equipment.

As described above, the operatively inner end of the insert 44 defines the bearing surface 52 which bears against the frit 38. In contrast to conventional end fitting arrangements of HPLC chromatography systems, the body member 40 of the end fitting 30 of the described embodiment defines a bore 42 having a diameter approximating that of the passage 34 of the body 32 of the column 18. In the illustrated embodiment, the bearing surface 52 has a surface area approximating that of a transverse cross-sectional area of the passage 34 of the column 18 and bears against the frit 38.

While the bearing surface 52 has been illustrated and described as having a diameter approximating that of the passage 34, in some applications the diameter of the bearing surface 52 of the insert 44 may be anywhere between 20% to 100% of the diameter of the passage 34 of the column 18. Ideally, there is no lower limit on the size of the bore 42 of the body 40 provided the bore 42 can accommodate other components, apart from the insert 44, as described elsewhere in this specification.

Further, as described, the flow conduit 46 which conveys the analyte downstream of the column 18 has an inner diameter significantly less than that of the passage 34. In an example, the inner diameter of the conduit 46 is about 0.2 mm, but it could be smaller or larger depending on whether the column 18 is used for preparative scale separations, analytical scale or microbore scale separations.

Due to the significant difference between the diameters of the conduit 46 and the passage 34 and with the bearing surface 52 bearing directly against an outer surface of the frit 38, dead volume between the conduit 46 and the frit 38 is minimised thereby maintaining the integrity of the analyte to be detected by the detection source 24.

As described in the Background section to the specification, as an analyte migrates along the column it does so with a band profile that is substantially parabolic and contains more solute in an axially centrally arranged zone in the passage 34 of the column 18 than radially distributed near the walls of the column. Ideally, the profile of the analyte should instead be a flat thin band where the solute is uniformly distributed. Because the inlet opening 48 into the flow conduit 46 of the insert 44 is of significantly smaller diameter than that of the passage 34 of the column 18, mobile phase and analyte contained outside of the axially centrally arranged zone of the passage 34 of the column 18 must migrate radially inwardly across the passage 34 of the column 18 to the inlet opening 48 of the flow conduit 46. The frit 38 located at the end of the column 18 assists in this radial migration but, nevertheless, analyte and mobile phase near the wall of the column require substantially more time to migrate to the inlet opening 48 of the flow conduit 46 than analyte and mobile phase that traversed the column axially centrally. As a result, with conventional chromatography systems 10, a chromatographic peak that is observed by the detection source 24 is broadened and usually contains a significant tailing factor. This broadening and tailing process reduces the efficiency of the separation and, hence, decreases the resolving power of the column.

However, with the provision of the end fitting 30 and its associated insert 44 and plug 74, the dead volume normally encountered by the analyte and mobile phase is significantly reduced resulting in a corresponding reduction in the broadening and tailing process and resulting in improved, discrete peaks in the chromatogram.

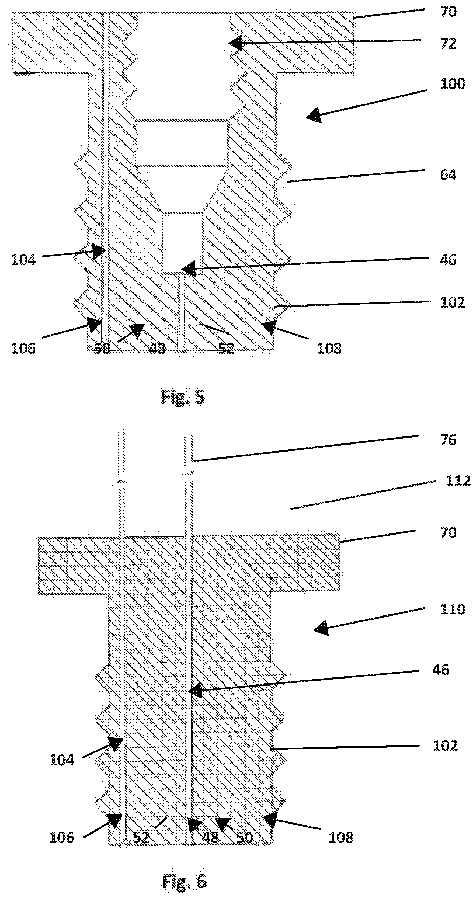

Referring now to Fig. 5 of the drawings an embodiment of a chromatography component is illustrated and is designated generally by the reference numeral 100. With reference to the previous drawings, like reference numerals refer to like parts, unless otherwise specified.

The component 100 includes a body 102 which, in use, replaces the insert 44 in the bore 42 of the body 40 of the end fitting 30. As in the case of the insert 44, the body 102 has threads 64 as its part of the complementary mounting formations 62 which engage the threads 66 in the bore 42 of the body member 40 of the end fitting 30.

Once again, it will be appreciated that, instead of the mounting formations 62 being in the form of threads 64, 66, other mounting formations such as snap fittings, press fittings, bayonet fittings, or the like, may be employed.

The body 102 defines the flow conduit 46, which, once again, is configured to minimise dead volume between the inlet end 48 of the flow conduit 46 and the frit 38 at the outlet end 22 of the tubular member 32 of the chromatography column 18.

An operatively inner end 50 of the body 102 defines the bearing surface 52 which bears against the operatively outer surface of the frit 38, as is the case with the insert 44. This further contributes to minimising dead volume between the flow conduit 46 and the frit 38.

The body 102 also includes the manipulating formation in the form of the enlarged head portion 70 via which the body 102 can be inserted into and removed from the bore 42 of the body member with the use of appropriate, manipulating tools. Further, the body 102 defines the port 72 in which the plug 74, which carries the capillary tubing 76, is receivable.

The body 102 defines at least one, axially extending flow conduit 104 radially offset with respect to the flow conduit 46. The conduit 104 has an inlet opening 106 opening out into a flow directing path, in the form of an annular channel or groove, 108 defined in the bearing surface 52 of the body 102. In use, a major portion of the radial component of the solute discharged from the chromatography column 18 is directed into the conduit 104 via the channel 108 to be conveyed to waste rather than needing to migrate radially inwardly to the flow conduit 46 through the frit 38.

In an embodiment, the component 100 functions as the splitter 26 of the chromatography system 10.

The body 102 is made of any of the same materials as the insert 44, as described above.

Referring now to Fig. 6 of the drawings, reference numeral 110 designates a further embodiment of a chromatography component. With reference to Figs. 1-5 of the drawings, like reference numerals, refer to like parts, unless otherwise specified.

The component 110 functions identically to the component 100 but is intended for use with dedicated, commercially available chromatography detectors provided by various providers. The component 110 is thus intended to be bespoke to a particular make of detector.

Therefore, the port 72 and related plug 74 are omitted. Instead, the flow conduit 46 extends the full length of the body 102 opening out into an operatively outer surface 112 of the body 102. The capillary tubing 76 connects to, or forms an extension of, the conduit 46 at the outer surface 112 for connection to its associated detector.

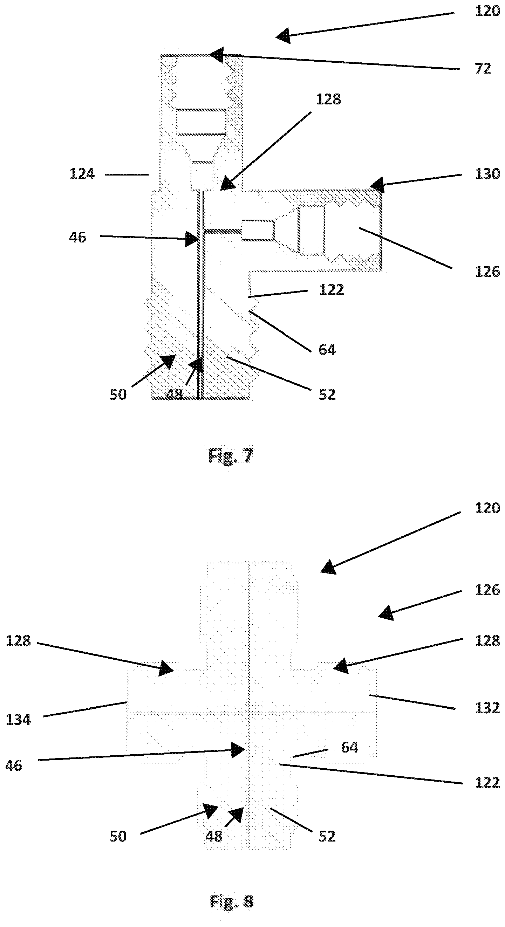

The embodiments described above with reference to Figs. 5 and 6 of the drawings relate to so-called "radial" splitters. Referring now to Figs. 7 and 8 of the drawings, two embodiments of "axial" flow splitter are described and which could function as the splitter 26 of the system 10.

In Fig. 7 of the drawings, reference numeral 120 designates an embodiment of an axial flow T-piece splitter. As in previous embodiments, like reference numerals refer to like parts, unless otherwise specified.

The splitter 120 has a body 122 defining the threads 64 for removable insertion into the bore 42 of the body 40 of the end fitting 30. The body 122 defines a first, axially extending portion 124 which, in use, is coaxially arranged with the passage 34 of the chromatography column 18. The portion 124 defines the conduit 46 opening out into the port 72, the port 72, in use, receiving the plug 74 carrying the capillary tubing 76 (neither of which is shown in this figure).

The body 122 defines a second portion 126 extending radially outwardly upstream of the outlet opening of the conduit 46 into the port 72. In the illustrated example, the portion 126 extends orthogonally relative to the portion 124 but it will be appreciated that the portion 126 could extend in any transverse direction relative to the portion 124.

The portion 126 defines a secondary flow conduit 128 branching off the flow conduit 46 and opening out into a secondary port 130. The secondary port 130, in use, receives a secondary plug and capillary tubing (neither of which is shown) for conveying an axially flowing component of the analyte traversing the flow conduit 46 to other equipment or to waste.

Referring now to Fig. 8 of the drawings, an alternative arrangement to that shown in Fig. 7 of the embodiment of the component 120 is illustrated. In this embodiment, the second portion 126 of the body 122 comprises two, radially oppositely extending parts 132 and 134, each part defining its associated secondary conduit 128.

With this, cross-piece arrangement, one of the parts 132 or 134 could be used to convey a component of the analyte to further equipment of the system 10 while the other of the parts 132 or 134 could be used to convey another component of the analyte to waste.

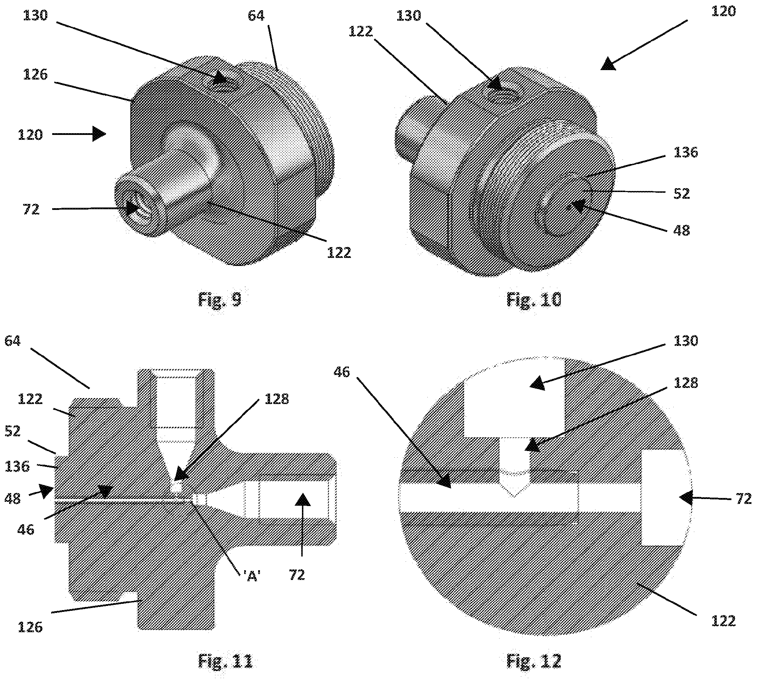

In Figs. 9-11 of the drawings, a further version of the T-piece component is illustrated. In this embodiment, it is to be noted that the operatively inner surface of the body 122 defines a raised formation or boss 136. The boss 136 defines the bearing surface 52 which has a peripheral dimension approximating that of the inner diameter of the passage 34 of the chromatography column 18. It will be appreciated that, it is a reasonably simple exercise to modify this embodiment of the component 120 to have the cross-piece arrangement as illustrated in Fig. 8 of the drawings.

It will be appreciated that, by diverting a portion of the axial component of the analyte, the efficiency of the chromatography system 10 is improved.

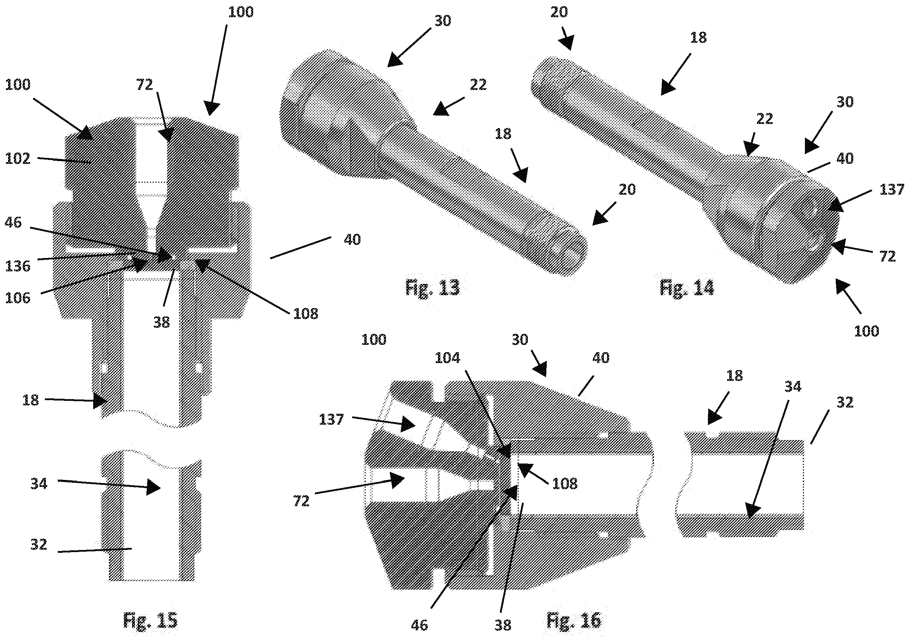

Referring to Figs. 13-16 of the drawings, a version of the radial splitter 100 of Fig. 5 is illustrated mounted to a chromatography column 18. In this embodiment, the secondary conduit 104 projects at an acute angle relative to the flow conduit 46 and opens out into a port 137 which receives a plug carrying capillary tubing (neither of which is shown) for conveying a radial portion of the analyte to waste.

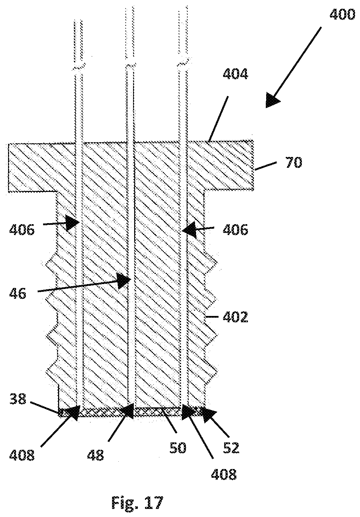

Referring now to Fig. 17 of the drawings, a chromatography component operable as a post-column reactor is illustrated and is designated generally by the reference numeral 400. With reference to Figs. 1-4 of the drawings, like reference numerals refer to like parts, unless otherwise specified.

The reactor 400 includes a body 402 which is shaped and configured to fit within the bore 42 of the body member 40 after removal of the insert 44. Hence, the body 402 carries the threads 64 for mounting within the bore 42 of the body member 40.

In this embodiment, the flow conduit 46 extends through the full length of the body 400 opening out into an operatively outer end 404 of the body 402. It will, however, be appreciated that, instead, the body 402 could define a socket 72 similar to that shown in the insert 44 in Fig. 2 of the drawings with the socket 70 to receive the plug 74 and capillary tubing 76 (neither of which is shown).

The body 402 further defines at least one secondary flow conduit 406. In the illustrated embodiment, the embodiment defines a plurality of radially and circumferentially spaced secondary flow conduits 406. The flow conduits 406 are radially spaced from the flow conduit 46 and extending parallel to the flow conduit 46 and to each other, each flow conduit 406 opening out into the operatively inner end 50 of the body 402 via an outlet 408.

The flow conduit 406 communicate with a source (not shown) of a suitable reagent for reacting with the analyte to enhance detectability of the analyte by the detection source 24. In the illustrated embodiment, the outlet 408 of each flow conduit 406 communicates indirectly with the inlet 48 of the flow conduit 46 via the frit 38 arranged at the outlet end 22 of the chromatography column 18. In other embodiments, the outlet 408 may open directly into the flow conduit 46 proximate its inlet end 48.

In use, the reactor 400 is inserted into the end fitting 40 after removal of the insert 44 with the operatively inner end 50 of the body 402 bearing against the frit 38. Once again, the shape and configuration of the body 402 ensures that there is minimal dead volume between the inlet opening 48 of the flow conduit 46 and the contents at the outlet end 22 of the column 18 to improve detection of the analyte by the detector 24.

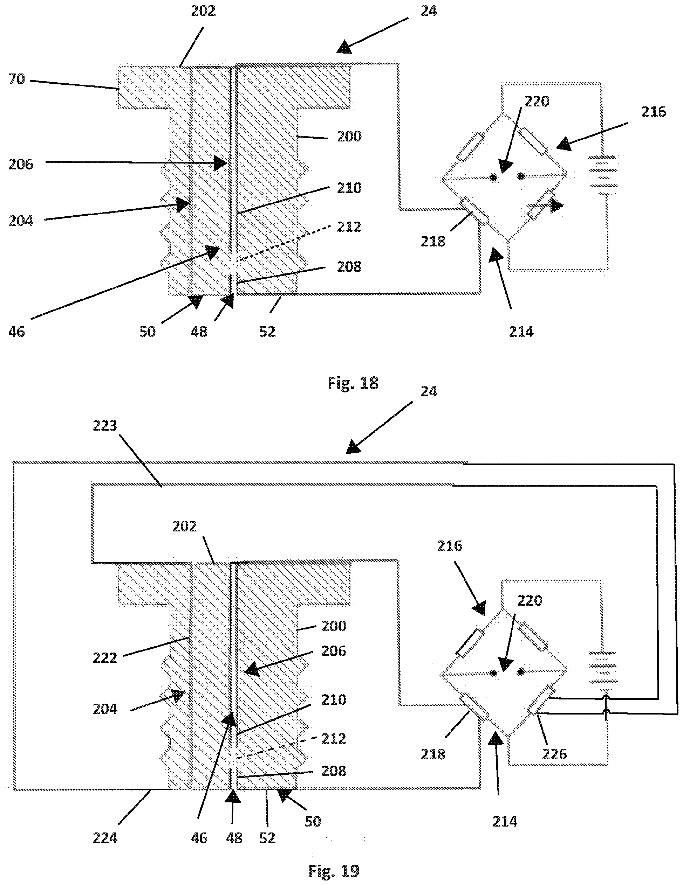

Referring to Figs. 18 and 19 of the drawings, two embodiments of a detection source, or detector, 24 are illustrated and described. With reference to Figs. 1-4 of the drawings, like reference numerals refer to like parts, unless otherwise specified.

In the embodiment illustrated in Fig. 18 of the drawings, the detector 24 is a conductivity detector and includes a body 200 mountable to the outlet end 22 of the chromatography column 18 via the body member 40 of the end fitting 30 after removal of the insert 44. Hence, the body 200 has a shape and configuration to be received within the bore 42 of the body member 40 of the end fitting 30.

In contrast to the insert 44, the flow conduit 46 extends from the operatively inner end of the body 200 to an operatively outer end 202 of the body 200.

The body 200 further defines a secondary flow conduit 204 which, in the illustrated embodiment, is radially offset with respect to the flow conduit 46 and extends parallel to the flow conduit 46 for conveying a radial component of the analyte to waste.

A sensing arrangement 206 is contained within the flow conduit 46. The sensing arrangement 206 comprises a pair of spaced electrodes 208 and 210 isolated from each other via a dielectric element such as a dielectric ferrule 212. The electrodes 208 and 210 of the sensing arrangement 206 are connected to signal processing circuitry 214. In the illustrated embodiment, the signal processing circuitry 214 comprises a Wheatstone bridge arrangement 216 with the analyte and electrodes 208 and 210 functioning as an impedance 218 in one of the legs of the bridge 216.

An output 220 of the Wheatstone bridge arrangement 216 is connected to further processing circuitry (not shown) to generate the chromatogram.

It will be appreciated that, in a variation of this embodiment, the secondary flow conduit 204 could be omitted so that the entire flow from the column 18 passes through the flow conduit 46.

In the embodiment illustrated in Fig. 19 of the drawings, the detector 24 is an electrochemical detector. With reference to Fig. 18 of the drawings, like reference numerals refer to like parts, unless otherwise specified.

In this embodiment, the secondary conduit 204 contains a reference electrode 222 connected via a connection 223 and an earth connection 224 into a further leg of the Wheatstone bridge arrangement 216 to provide the variable impedance 226 of the Wheatstone bridge arrangement 216.

It is an advantage of both embodiments described above that, due to the configuration of the body 200 of the detector 24, the detector 24 fits like the insert 44 within the bore 42 of the body 40 of the fitting 30 with the bearing surface 52 bearing against the frit 38 at the outlet end 22 of the chromatography column 18. As a result, dead volume between the detector 24 and the contents of the chromatography column 18 is minimised thereby greatly improving the efficiency of the system 10. As indicated above, the detector 24 effectively detects the axially, centrally arranged part of the analyte as a point source resulting in improved peak discrimination in the chromatogram.

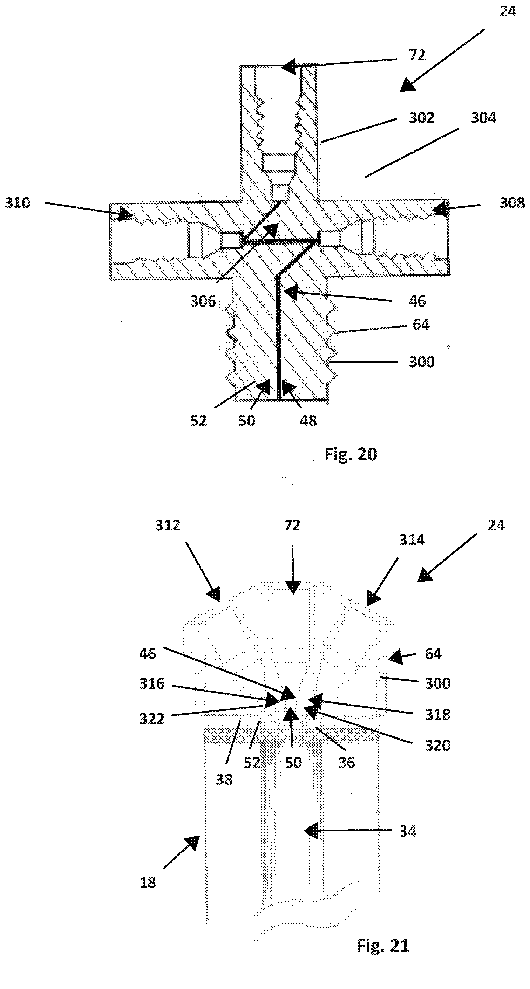

Referring to Figs. 20 and 21 of the drawings, two embodiments of a detection source, or detector, 24 are illustrated and described. With reference to Figs. 1-4 the drawings, like reference numerals refer to like parts, unless otherwise specified.

In the embodiment illustrated in Fig. 20 of the drawings, the detector 24 is an ultraviolet (UV) detector and includes a body 300 mountable to the outlet end 22 of the chromatography column 18 via the body member 40 of the end fitting 30 after removal of the insert 44. Hence, the body 300 has a portion having a shape and configuration to be received within the bore 42 of the body member 40 of the end fitting 30.

In the illustrated embodiment, the body 300 has a cross-piece configuration with a first, axially extending portion 302 and a transversely extending portion 304 intersecting the axially extending portion 302. In the illustrated embodiment, the transversely extending portion 304 is orthogonally arranged relative to the axially extending portion 302.

The axially extending portion carries the threads 64 which engage the threads 66 of the body member 40 of the fitting 30 to be received in the bore 42 of the body member 40. Further, the axially extending portion 302 defines the flow conduit 46. However, in this embodiment, the flow conduit 46 has a tortuous, zigzag shape to provide a straight-through path 306 between a first port 308 and an opposed second port 310, the ports 308 and 310 being defined in the transversely extending portion 304 of the body 300. An outlet end of the conduit 46 downstream of the straight-through part 306, opens out into the socket 72.

The ports 308 and 310 are axially aligned with each other and with the flow path 306 to provide a straight through path for UV radiation. Hence, the port 308 is an input port connected to a source of UV radiation (not shown) and the port 310 is an output port to which a UV radiation detection element (not shown) is connectable. The UV radiation detection element may, for example, be a photodiode or other photodetector with or without a beam splitter, a beam splitter and secondary photodiode normally being provided for improving optical performance.

In operation, the detector 24 of Fig. 20 of the drawings works in the same way as a conventional UV radiation detector but with the benefit of being mountable directly to the outlet end 22 of the chromatography column 18 to minimise dead volume between the detector 24 and the outlet end 22 of the chromatography column 18.

If desired, the body 300 may define a further flow conduit radially spaced from the flow conduit 46 through which a radial component of the analyte flows to be conveyed to waste.

Referring to Fig. 21 of the drawings, a fluorescence detector 24 is illustrated and described. With reference to Fig. 20 of the drawings, like reference numerals refer to like parts, unless otherwise specified.

In this embodiment, the body 300 defines the flow conduit 46 opening out into the port 72. The body 300 further defines a first, input port 312 and a second, output port 314 each communicating with a flow conduit 316 and 318, respectively. The conduits 316 and 318 communicate with an annular groove or channel 320 defined at the operatively inner end 50 of the body 300.

In this regard, it is to be noted that the operatively inner end 50 of the body 300 carries a raised formation, or boss, 322 which defines the bearing surface 52. The boss 322 has a peripheral dimension approximating that of the peripheral dimension of the passage 34 of the column 18. In use, the boss 322 bears against the outer surface of the frit 38.

The input port 312 receives a source of electromagnetic radiation, for example, from a laser and the port 312 is configured to receive an electromagnetic radiation carrier such as an optical fibre cable (not shown). Similarly, the port 314 is configured to receive an electromagnetic radiation carrier such as an optical fibre cable (not shown) for conveying electromagnetic radiation arising from fluorescence of the sample to a detection element such as a diode array detector (not shown).

The detector 24 of Fig. 21 operates as a fluorescence detector fluorescing the sample causing emission of light when an electron returns from an excited state to its ground state after having been irradiated with the electromagnetic radiation. When this occurs, light is emitted in all directions so, unlike a UV detector, it is preferable to monitor emissions at an angle relative to the excitation source otherwise the detection element would have to filter out the light at the excitation wavelength. Thus, typically, the ports 312 and 314 are arranged at an acute angle relative to each other or may be orthogonally arranged relative to each other.

As is the case with the UV detector of Fig. 20 of the drawings, the fluorescence detector of Fig. 21 of the drawings operates in the same manner as a conventional fluorescence detector but with the benefit of being mounted directly to the outlet end 22 of the chromatography column 18 to minimise dead volume. As indicated above, the boss 322 bears directly against the frit 38 and the inlet opening 48 of the flow conduit 46 opens out into the bearing surface 52 defined by the boss 322. Thus, dead volume between the flow conduit 46 and the outer surface of the frit 38 is substantially reduced.

It is therefore an advantage of both embodiments described above that, due to the configuration of the body 300 of the detector 24, dead volume between the detector 24 and the contents of the chromatography column is minimised thereby greatly improving the efficiency of the system 10. As described above, the detector 24 effectively detects the axially, centrally arranged part of the analyte as a point source resulting in improved peak discrimination in the chromatogram.

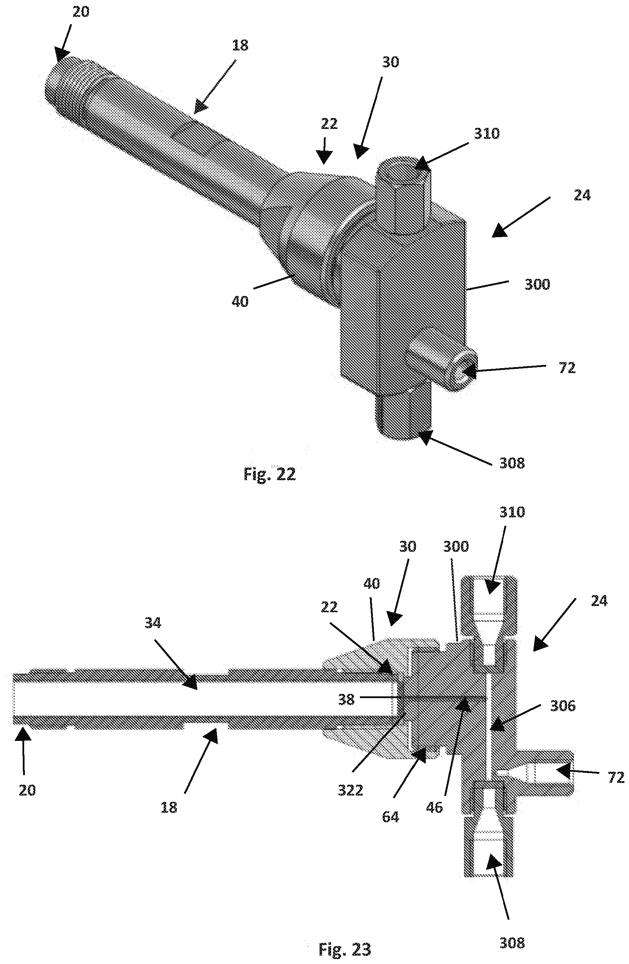

Figs. 22 and 23 of the drawings show an embodiment of a further version the UV detector 24 of Fig. 20. It is noted that, in this embodiment too, the body 300 has the boss 322 at its operatively inner end defining the bearing surface 52, the boss 322 having a peripheral dimension approximating that of the passage 24 of the chromatography column 18.

In this embodiment, the fluid conduit 46 is not a zig-zag path but, instead, the straight through path 306 of the fluid conduit 46 communicating with the ports 308 and 310 is orthogonally arranged relative to the remainder of the fluid conduit 46.

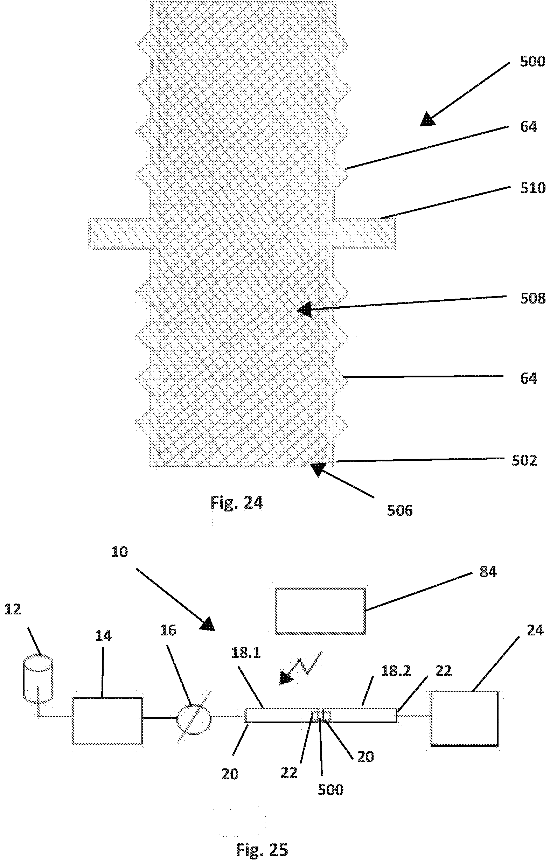

Referring to Fig. 24 of the drawings, a chromatography component in the form of a column-to-column coupler is illustrated and is designated generally by the reference numeral 500. With reference to Figs. 1-4 of the drawings, like reference numerals refer to like parts, unless otherwise specified.

The coupler 500 includes a body 502 mountable to an outlet end 22 of the column 18.1, operating as an upstream column in the configuration of the system 10 shown in Fig. 25 of the drawings. The body 502 is further mountable to an inlet end 20 (Fig. 25) of a second, downstream chromatography column 18.2, operating as a downstream column in the configuration of the system shown in Fig. 25 of the drawings. It will be appreciated that each column 18.1, 18.2 has end fittings 30 attached to both its inlet end 20 and its outlet end 22 to enable the columns 18.1 and 18.2 to be connected bi-directionally.

The body 502 defines a passageway 506 extending through it to be in flow communication, in use, with contents of each of the chromatography columns 18.1, 18.2. A medium 508 is contained within the passageway 506 through which an analyte, exiting the chromatography column 18.1 can pass, before the analyte enters the chromatography column 18.2.

In an embodiment, the medium 508 is a meshed material which is either a monolithic medium or a stationary phase the same as that of at least the chromatography column 18.1. An internal diameter of the passageway 506 approximates that of the passage 24 of the chromatography columns 18.1, 18.2 and bears against frits 38 at the outlet end 22 of the chromatography column 18.1 and at the inlet end 20 of the chromatography column 18.2 in cases where the frits 38 are used. Where the stationary phase is a monolithic medium, the frits may be omitted with the medium 508 of the coupler 500 being in direct contact with the monolithic media in each of the columns 18.1, 18.2.

The body 502 contains threads 64 on its external surface for being screw-threadedly received in the bore 42 of the body 40 of the end fitting 30 at each of the outlet end 22 of the chromatography column 18.1 and the inlet end 20 of the chromatography column 18.2. The two sets of threads 64 are separated by a substantially longitudinally, centrally arranged, radially outwardly extending collar 510. The collar 510 thus defines a pair of opposed abutment surfaces, against each of which an end of the body member 40 of the relevant end fitting 30 abuts, in use, firmly to retain the columns 18.1 and 18.2 in axial alignment with each other.

Hence, in use, a first end of the body 502 of the coupler 500 is received in the bore 42 of the body member 40 of the end fitting 30 arranged at the outlet end 22 of the column 18.1 after removal of the insert 44 from the bore 42. Similarly, a second end of the body 502 of the coupler 500 is received in the bore 42 of the body member 40 of the end fitting 30 arranged at the inlet end 20 of the column 18.2 after removal of the insert from the bore 42. The coupler 500 thus serves to couple the columns 18.1 and 18.2 axially.

In an embodiment, the columns 18.1 and 18.2 contain different stationary phases for facilitating different reactions with the mobile phase as the mobile phase passes through the columns 18.1 and 18.2.

Once again, it is an advantage of the coupler 500 that the body 502, with its contents 508, bears against the contents of the respective columns 18.1 and 18.2 and, in so doing, minimises dead volume between the interior of the coupler 500 and the contents of the columns 18.1, 18.2.

It is a primary advantage of the described embodiments of the end fittings 30 that, due to the configuration of the insert 44, or any other component received within the bore 42 of the body 40 in place of the insert 44, dead volume between the outer surface of the frit 38, or the stationary phase 36 itself if the frit 38 is omitted, and the inlet end 48 of the flow conduit 46 is substantially reduced thereby maintaining the integrity of the analyte as it is conveyed to the detection source 24. This results in more discrete peaks being generated in the chromatogram providing for improved analysis.

In addition, greater throughput of samples through the system 10 can be achieved allowing for a higher rate of analysis.

Also, by minimising dead volume, as described, the resolution of the column 18 is improved.

It is a further advantage of the described embodiments, that a chromatography system 10, with the described end fittings 30, is provided which is of great versatility with numerous applications, with the column 18 either performing as a conventional chromatography column or a special-purpose column 18 depending on the component received in the body member 40 of the end fitting 30 after removal of the insert 44.

## Claims

1. A chromatography column fitting (30) which includes:
a body member (40) configured to be received at an end (22) of a chromatography column (18), the body member (40) defining an axially extending open bore (42) having a portion defining a diameter approximating that of a passage (34) of the column (18), the body member being internally stepped to define a shoulder (68) configured to bear against a frit (38) at the end (22) of the chromatography column (18) to retain the frit (38) in position at the end (22) of column (18); and
an insert (44) removably received in the bore (42), the insert defining a flow conduit (46) opening out into an operatively inner end (50) of the insert (44) to be in flow communication, in use, with an interior (34) of the chromatography column (18), the operatively inner end (50) defining a planar bearing surface (52) which has a diameter approximating that of the passage (34) of the column (18), the bearing surface (52) configured to bear against the frit (38) to minimise dead volume between the flow conduit (46) and the frit (38), **characterised in that**
each of the insert (44) and the body member (40) carry complementary mounting formations (62) which facilitate removable insertion of the insert (44) into the bore (42) of the body member (40).

2. The fitting (30) of claim 1 in which the bore (42) is configured to accommodate the operatively inner end (50) of the insert (44) substantially flush with the shoulder (68).

3. The fitting (30) of any one of the preceding claims in which the bearing surface (52) of the insert (44) is defined by a boss (136) having an outer diameter approximating that of the diameter of the passage (34) of the column (18).

4. The fitting (30) of any one of the preceding claims in which the insert (44) defines a receiving formation (72), into which the flow conduit (46) opens, in which a component (74) is removably receivable.

5. The fitting (30) of any one of the preceding claims in which the bore (42) of the body member (40) is configured, upon removal of the insert (44), to receive one of a range of other chromatography components removably in the bore (42).

6. A chromatography component (100) which includes
a body (102) configured to be mounted to an end (22) of a chromatography column (18) by the body member (40) of the chromatography column fitting (30) of claim 1, the body (102) defining a first flow conduit (46) opening out into an operatively inner end (50) of the body (102) to be in flow communication, in use, with an interior (34) of the chromatography column (18);
a bearing surface (52) defined by the operatively inner end (50) which bears against contents (36, 38) at the end (22) of the chromatography column (18) to minimise dead volume between the flow conduit (46) and the contents (36, 38) of the chromatography column (18); and
at least one further flow conduit (104) defined by the body (102), at least a portion of an analyte passing through the column (18) being received in the at least one further flow conduit (104).

7. The chromatography component (100) of claim 6 in which the body (102) is removably receivable in the bore (42) of the body member (40), the body (102) and the body member (40) defining complementary mounting formations (62) for mounting the body (102) within the bore (42) of the body member (40).

8. The chromatography component (100) of claim 6 or 7 in which the operatively inner end (50) of the body (102) has a peripheral dimension approximating a peripheral dimension of an interior passage (34) of the chromatography column (18) for bearing against contents (36, 38) of the chromatography column (54).

9. The chromatography component (100) of any one of claims 6 to 8 in which the first flow conduit (46) extends axially and centrally along the body (102) with the at least one further flow conduit (104) extending parallel to, but radially offset from, the first flow conduit (46).

10. The chromatography component (100) of claim 9 in which a flow directing path (108) is defined in the body (102) for directing flow of a portion of the analyte to the at least one further flow conduit (104).

11. The chromatography component (100) of claim 9 or 10 in which the first flow conduit (46) communicates with tubing to supply analyte from the chromatography column (18) to downstream equipment of a chromatography system.

12. The chromatography component (100) of claim 11 in which the first flow conduit (46) opens into a port (72) defined in the body (102), the port (72) being configured to receive a chromatography element which carries the tubing for connecting the chromatography column (18) to the downstream equipment of the chromatography system.

13. The chromatography component (100) of any one of claims 6 to 8 in which the first flow conduit (46) extends axially and centrally along the body (102) with the at least one further flow conduit (104) branching off from the first flow conduit (46) at a location spaced from the operatively inner end (50) of the body (102).

14. The chromatography component (100) of claim 13 in which the body (102) defines a first portion (124) extending substantially parallel to, and co-axially with, a longitudinal axis of the chromatography column (18) and a second portion (126) extending transversely from the first portion (124) with the at least one further flow conduit (104) being defined in the second portion (126).

15. The chromatography component (100) of claim 14 in which the second portion (126) comprises two parts (132, 134) extending in radially opposite directions from the first portion (124) with the at least one further flow conduit (104) being defined in each of the two parts (132, 134).

16. The chromatography component (100) of any one of claims 6 to 15 which includes at least one secondary flow conduit (128) defined in the body (102) and being configured for injection of a reagent for mixing with an analyte exiting the chromatography column.

17. The chromatography component (100) of claim 16 in which each secondary flow conduit (128) communicates indirectly with the primary flow conduit.

18. The chromatography component (100) of claim 17 in which each secondary flow conduit (128) communicates with the primary flow conduit via a retention element (38) arranged at the end of the chromatography column (18).

## Patentansprüche

1. Ein Chromatographiesäulenfitting (30), umfassend:
ein Körperelement (40), das konfiguriert ist, an einem Ende (22) einer Chromatographiesäule (18) aufgenommen zu werden, wobei das Körperelement (40) eine sich axial erstreckende offene Bohrung (42) definiert, die einen Abschnitt aufweist, der einen Durchmesser definiert, der sich dem eines Durchgangs (34) der Säule (18) annähert, wobei das Körperelement innen abgestuft ist, um eine Schulter (68) zu definieren, die konfiguriert ist, gegen eine Fritte (38) an dem Ende (22) der Chromatographiesäule (18) zu drücken, um die Fritte (38) an dem Ende (22) der Säule (18) in Position zu halten; und
einen Einsatz (44), der herausnehmbar in der Bohrung (42) aufgenommen ist, wobei der Einsatz einen Strömungskanal (46) definiert, der sich in ein operativ inneres Ende (50) des Einsatzes (44) öffnet, um bei Verwendung in Strömungsverbindung mit einem Innenraum (34) der Chromatographiesäule (18) zu stehen, wobei das operativ innere Ende (50) eine ebene Auflagefläche (52) definiert, die einen Durchmesser aufweist, der sich dem des Durchgangs (34) der Säule (18) annähert, wobei die Auflagefläche (52) konfiguriert ist, gegen die Fritte (38) zu drücken, um ein Totvolumen zwischen dem Strömungskanal (46) und der Fritte (38) zu minimieren, **dadurch gekennzeichnet, dass**
jedes von dem Einsatz (44) und dem Körperelement (40) komplementäre Befestigungsformationen (62) tragen, die das herausnehmbare Einsetzen des Einsatzes (44) in die Bohrung (42) des Körperelements (40) ermöglichen.

2. Das Fitting (30) nach Anspruch 1, bei dem die Bohrung (42) konfiguriert ist, das operativ innere Ende (50) des Einsatzes (44) im Wesentlichen bündig mit der Schulter (68) aufzunehmen.

3. Das Fitting (30) nach einem der vorhergehenden Ansprüche, bei dem die Auflagefläche (52) des Einsatzes (44) durch einen Vorsprung (136) definiert ist, dessen Außendurchmesser sich dem Durchmesser des Durchgangs (34) der Säule (18) annähert.

4. Das Fitting (30) nach einem der vorhergehenden Ansprüche, bei dem der Einsatz (44) eine Aufnahmeformation (72) definiert, in die der Strömungskanal (46) mündet, in der ein Bauteil (74) herausnehmbar aufgenommen werden kann.

5. Das Fitting (30) nach einem der vorhergehenden Ansprüche, bei dem die Bohrung (42) des Körperelementes (40) konfiguriert ist, dass sie, bei Entfernung des Einsatzes (44), eine aus einer Reihe anderer Chromatographiekomponenten herausnehmbar in der Bohrung (42) aufnimmt.

6. Eine Chromatographiekomponente (100), umfassend:
einen Körper (102), der konfiguriert ist, an einem Ende (22) einer Chromatographiesäule (18) durch das Körperelement (40) des Chromatographiesäulenfittings (30) nach Anspruch 1 montiert zu werden, wobei der Körper (102) einen ersten Strömungskanal (46) definiert, die sich in ein operativ inneres Ende (50) des Körpers (102) öffnet, um bei Verwendung in Strömungsverbindung mit einem Innenraum (34) der Chromatographiesäule (18) zu stehen;
eine Auflagefläche (52), die durch das operativ innere Ende (50) definiert ist und gegen einen Inhalt (36, 38) an dem Ende (22) der Chromatographiesäule (18) drückt, um ein Totvolumen zwischen dem Strömungskanal (46) und dem Inhalt (36, 38) der Chromatographiesäule (18) zu minimieren; und
mindestens einen weiteren Strömungskanal (104), der durch den Körper (102) definiert ist, wobei mindestens ein Teil eines Analyten, der die Säule (18) durchläuft, in dem mindestens einen weiteren Strömungskanal (104) aufgenommen wird.

7. Die Chromatographiekomponente (100) nach Anspruch 6, bei der der Körper (102) herausnehmbar in der Bohrung (42) des Körperelements (40) aufgenommen werden kann, wobei der Körper (102) und das Körperelement (40) komplementäre Befestigungsformationen (62) zur Befestigung des Körpers (102) in der Bohrung (42) des Körperelements (40) definieren.

8. Die Chromatographiekomponente (100) nach Anspruch 6 oder 7, bei der das operativ innere Ende (50) des Körpers (102) eine Umfangsabmessung aufweist, die sich einer Umfangsabmessung eines inneren Durchgangs (34) der Chromatographiesäule (18) annähert, um gegen den Inhalt (36, 38) der Chromatographiesäule (54) zu drücken.

9. Die Chromatographiekomponente (100) nach einem der Ansprüche 6 bis 8, bei der sich der erste Strömungskanal (46) axial und zentral entlang des Körpers (102) erstreckt, wobei sich der mindestens eine weitere Strömungskanal (104) parallel zu dem ersten Strömungskanal (46), aber radial versetzt zu diesem erstreckt.

10. Die Chromatographiekomponente (100) nach Anspruch 9, bei der im Körper (102) ein Strömungsleitpfad (108) definiert ist, um die Strömung eines Teils des Analyten zu dem mindestens einen weiteren Strömungskanal (104) zu leiten.

11. Die Chromatographiekomponente (100) nach Anspruch 9 oder 10, bei der der erste Strömungskanal (46) mit einer Leitung in Verbindung steht, um den Analyten von der Chromatographiesäule (18) zu stromabwärts gelegener Ausrüstung eines Chromatographiesystems zu führen.

12. Die Chromatographiekomponente (100) nach Anspruch 11, bei der der erste Strömungskanal (46) in einen im Körper (102) definierten Anschluss (72) mündet, wobei der Anschluss (72) konfiguriert ist, ein Chromatographieelement aufzunehmen, das die Leitung zur Verbindung der Chromatographiesäule (18) mit der stromabwärts gelegenen Ausrüstung des Chromatographiesystems trägt.

13. Die Chromatographiekomponente (100) nach einem der Ansprüche 6 bis 8, bei der sich der erste Strömungskanal (46) axial und zentral entlang des Körpers (102) erstreckt, wobei der mindestens eine weitere Strömungskanal (104) von dem ersten Strömungskanal (46) an einer Stelle abzweigt, die von dem operativ inneren Ende (50) des Körpers (102) beabstandet ist.

14. Die Chromatographiekomponente (100) nach Anspruch 13, bei der der Körper (102) einen ersten Abschnitt (124), der sich im Wesentlichen parallel zu und koaxial mit einer Längsachse der Chromatographiesäule (18) erstreckt, und einen zweiten Abschnitt (126), der sich quer zu dem ersten Abschnitt (124) erstreckt, definiert, wobei der mindestens eine weitere Strömungskanal (104) in dem zweiten Abschnitt (126) definiert ist.

15. Die Chromatographiekomponente (100) nach Anspruch 14, bei der der zweite Abschnitt (126) zwei Teile (132, 134) umfasst, die sich in radial entgegengesetzten Richtungen von dem ersten Abschnitt (124) aus erstrecken, wobei der mindestens eine weitere Strömungskanal (104) in jedem der beiden Teile (132, 134) definiert ist.

16. Die Chromatographiekomponente (100) nach einem der Ansprüche 6 bis 15, die mindestens einen sekundäre Strömungskanal (128) umfasst, der in dem Körper (102) definiert und zum Injizieren eines Reagens zum Mischen mit einem die Chromatographiesäule verlassenden Analyten konfiguriert ist.

17. Die Chromatographiekomponente (100) nach Anspruch 16, bei der jeder sekundäre Strömungskanal (128) indirekt mit dem primären Strömungskanal verbunden ist.

18. Die Chromatographiekomponente (100) nach Anspruch 17, bei der jeder sekundäre Strömungskanal (128) mit dem primären Strömungskanal über ein am Ende der Chromatographiesäule (18) angeordnetes Rückhalteelement (38) verbunden ist.

## Revendications

1. Montage pour colonne de chromatographie (30) qui comporte :
un élément de corps (40) configuré pour être reçu sur une extrémité (22) d'une colonne de chromatographie (18), l'élément de corps (40) définissant un alésage ouvert s'étendant axialement (42) ayant une portion définissant un diamètre approximant celui d'un passage (34) de la colonne (18), l'élément de corps étant étagé en interne pour définir un épaulement (68) configuré pour porter contre une fritte (38) sur l'extrémité (22) de la colonne de chromatographie (18) afin de retenir la fritte (38) en position sur l'extrémité (22) de la colonne (18) ; et
un insert (44) reçu dans l'alésage (42) de manière amovible, l'insert définissant un conduit d'écoulement (46) débouchant dans une extrémité intérieure en fonctionnement (50) de l'insert (44) pour être en communication d'écoulement, en l'utilisation, avec un intérieur (34) de la colonne de chromatographie (18), l'extrémité intérieure en fonctionnement (50) définissant une surface d'appui plane (52) qui a un diamètre approximant celui du passage (34) de la colonne (18), la surface d'appui (52) étant configurée pour porter contre la fritte (38) afin de minimiser un volume mort entre le conduit d'écoulement (46) et la fritte (38), **caractérisé en ce que**
l'insert (44) et l'élément le corps (40) portent chacun des formations de montage complémentaires (62) qui facilitent une insertion amovible de l'insert (44) dans l'alésage (42) de l'élément de corps (40).

2. Montage (30) selon la revendication 1, dans lequel l'alésage (42) est configuré pour recevoir l'extrémité intérieure en fonctionnement (50) de l'insert (44) de manière sensiblement affleurante à l'épaulement (68).

3. Montage (30) selon l'une quelconque des revendications précédentes, dans lequel la surface d'appui (52) de l'insert (44) est définie par un bossage (136) ayant un diamètre extérieur approximant celui du diamètre du passage (34) de la colonne (38).

4. Montage (30) selon l'une quelconque des revendications précédentes, dans lequel l'insert (44) définit une formation de réception (72), dans laquelle le conduit d'écoulement (46) débouche, dans lequel un composant (74) peut être reçu de manière amovible.

5. Montage (30) selon l'une quelconque des revendications précédentes, dans lequel l'alésage (42) de l'élément de corps (40) est configuré, lors d'un retrait de l'insert (44), pour recevoir un parmi un éventail d'autres composants de chromatographie de manière amovible dans l'alésage (42).

6. Composant de chromatographie (100) qui comporte un corps (102) configuré pour être monté sur une extrémité (22) d'une colonne de chromatographie (18) par l'élément de corps (40) du montage pour colonne de chromatographie (30) de la revendication 1, le corps (102) définissant un premier conduit d'écoulement (46) débouchant dans une extrémité intérieure en fonctionnement (50) du corps (102) pour être en communication d'écoulement, en utilisation, avec un intérieur (34) de la colonne de chromatographie (18) ;
une surface d'appui (52) définie par l'extrémité intérieure en fonctionnement (50) qui porte contre un contenu (36, 38) sur l'extrémité (22) de la colonne de chromatographie (18) afin de minimiser un volume mort entre le conduit d'écoulement (46) et le contenu (36, 38) de la colonne de chromatographie (18) ; et
au moins un conduit d'écoulement supplémentaire (104) défini par le corps (102), au moins une portion d'un analyte passant à travers la colonne (18) étant reçue dans le au moins un conduit d'écoulement supplémentaire (104).

7. Composant de chromatographie (100) selon la revendication 6, dans lequel le corps (102) peut être reçu de manière amovible dans l'alésage (42) de l'élément de corps (40), le corps (102) et l'élément de corps (40) définissant des formations de montage complémentaires (62) pour monter le corps (102) à l'intérieur de l'alésage (42) de l'élément de corps (40).

8. Composant de chromatographie (100) selon la revendication 6 ou 7, dans lequel l'extrémité intérieure en fonctionnement (50) du corps (102) a une dimension périphérique approximant une dimension périphérique d'un passage intérieur (34) de la colonne de chromatographie (18) pour porter contre un contenu (36, 38) de la colonne de chromatographie (54).

9. Composant de chromatographie (100) selon l'une quelconque des revendications 6 à 8, dans lequel le premier conduit d'écoulement (46) s'étend axialement et centralement le long du corps (102) avec le au moins un conduit d'écoulement supplémentaire (104) s'étendant parallèlement au premier conduit d'écoulement (46) mais radialement décalé de celui-ci .

10. Composant de chromatographie (100) selon la revendication 9, dans lequel un trajet de guidage d'écoulement (108) est défini dans le corps (102) pour diriger un écoulement d'une portion de l'analyte jusqu'au au moins un conduit d'écoulement supplémentaire (104).

11. Composant de chromatographie (100) selon la revendication 9 ou 10, dans lequel le premier conduit d'écoulement (46) communique avec un tube pour fournir un analyte provenant de la colonne de chromatographie (18) à un équipement en amont d'un système de chromatographie.

12. Composant de chromatographie (100) selon la revendication 11, dans lequel le premier conduit d'écoulement (46) débouche dans un orifice (72) défini dans le corps (102), l'orifice (72) étant configuré pour recevoir un élément de chromatographie qui supporte le tube pour raccorder la colonne de chromatographie (18) à l'équipement en amont du système de chromatographie.

13. Composant de chromatographie (100) selon l'une quelconque des revendications 6 à 8, dans lequel le premier conduit d'écoulement (46) s'étend axialement et centralement le long du corps (102) avec le au moins un conduit d'écoulement supplémentaire (104) bifurquant à partir du premier conduit d'écoulement (46) à un emplacement espacé de l'extrémité intérieure en fonctionnement (50) du corps (102).

14. Composant de chromatographie (100) selon la revendication 13, dans lequel le corps (102) définit une première portion (124) s'étendant de manière sensiblement parallèle et coaxialement à un axe longitudinal de la colonne de chromatographie (18), et une seconde portion (126) s'étendant transversalement à partir de la première portion (124) avec le au moins un premier conduit d'écoulement supplémentaire (104) étant défini dans la seconde portion (126) .

15. Composant de chromatographie (100) selon la revendication 14, dans lequel la seconde portion (126) comprend deux parties (132, 134) s'étendant dans des directions radialement opposées par rapport à la première portion (124) avec le au moins un conduit d'écoulement supplémentaire (104) étant défini dans chacune des deux parties (132, 134).

16. Composant de chromatographie (100) selon l'une quelconque des revendications 6 à 15, qui comporte au moins un conduit d'écoulement secondaire (128) défini dans le corps (102) et étant configuré pour l'injection d'un réactif en vue d'un mélange avec un analyte quittant la colonne de chromatographie.

17. Composant de chromatographie (100) selon la revendication 16, dans lequel chaque conduit d'écoulement secondaire (128) communique indirectement avec le conduit d'écoulement primaire.

18. Composant de chromatographie (100) selon la revendication 17, dans lequel chaque conduit d'écoulement secondaire (128) communique avec le conduit d'écoulement primaire via un élément de retenue (38) agencé sur l'extrémité de la colonne de chromatographie (18).
